# EUROPEAN PATENT APPLICATION

(11) **EP 2 065 227 A1**
(43) Date of publication of application: **03.06.2009**
(21) Application number: 07121637.8
(22) Date of filing: 27.11.2007
(51) Int. Cl.: B60C 17/06

(54) **Tire assembly with elastic annular tube**

(71) Applicant: Newtech International Co., Irvine CA 92614 (US)
(72) Inventor: Lin Maxwell H., Irvine, California CA92614 (US)
(74) Representative: Beck & Rössig European Patent Attorneys

(57) **Abstract**

A tire assembly includes a tire and an annular tube (10), wherein the tire further comprises securing edges (21) and a mounting cavity (22), the annular tube is installed inside the mounting cavity. The annular tube having a profile of a circular form with a volute structure (11), so that the annular tube will not be punctured and result in a flat tire.

## Description

### BACKGROUND OF THE INVENTION

### 1. Field of the Invention

The present invention relates to a tire assembly which enables a vehicle to avoid a flat tire. More particularly, the present invention relates to a tire assembly with an elastic annular tube which prevents the tire from puncture that further results in a flat tire.

### 2. Description of Related Art

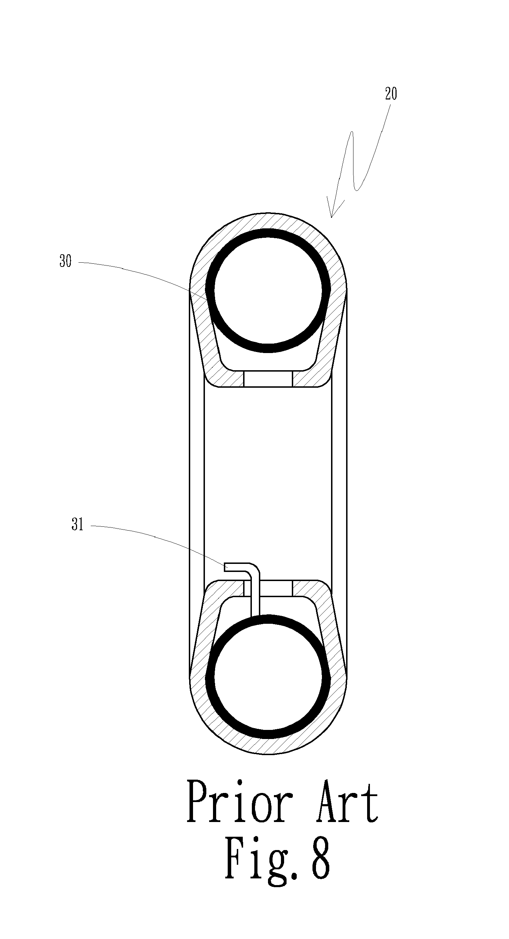

A conventional tire assembly for vehicle wheel as shown in Fig. 8 comprises a tire 20 and inner tube 30, wherein the inner tube 30 is installed in the inner cavity of the tire 20, and a valve stem 31 is located on such inner tube 30 in order to inflate the inner tube 30. However, the conventional tire has contained some improvable defects, such as:
1. Poor safety: When the tires are used in a vehicle to travel on the road, if the tires are punctured by a penetrating object, the inner tube of the tire will break and then become a flat tire, which will significantly cause a serious danger while the vehicle is running.
2. Inconvenience in operation: When the tire and the inner tube are punctured by the penetrating object, it takes a person to replace it with a new tire or repair the tire immediately. However, the process and operation of such replacement are complicated and difficult, so it causes some inconveniences in using the conventional tire.

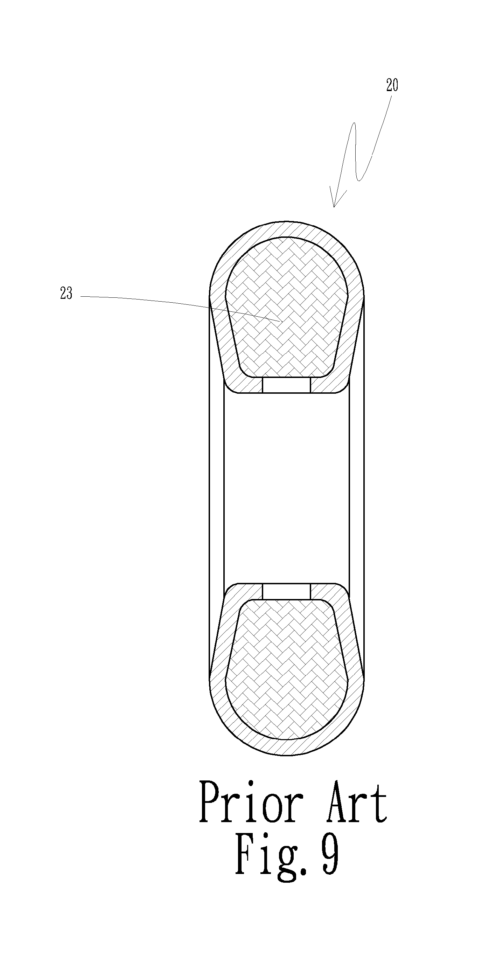

Another conventional tire assemble as shown in Fig. 9 comprises a foaming layer 23 made of integral rubber or plastic, which is installed inside the tire 20 to make the tire solid. However, it still has contained some improvable defects, such as:
1. High manufacturing cost: The conventional tire comprises an integral foaming layer which made of rubber or plastic to become a solid form. Due to the high volume of the materials used to infill the tire, the manufacturing costs of such conventional tire are inevitably higher, which resulted in a higher selling price.
2. Inconvenience in operation: The conventional tire comprises an integral foaming layer inside which also contributes to such a heavy weight of the tire. When the tire is to be replaced or repaired for the purpose of maintenance, it will not be a convenience job to disassemble the tire due to such a heavy weight.

The present invention is intended to improve the above mentioned drawbacks of the conventional tire assembly. The present invention provides improved solutions to the problems of poor safety, inconvenience in operation and high manufacturing cost.

### SUMMARY OF THE INVENTION

The invention provides a tire assembly according to claim 1. Advantagous embodiments are laid down in further claims.

The primary purpose for the present invention is to provide a safety tire assembly, comprising: a tire and an annular tube, wherein the tire further comprises a mounting cavity where the annular tube is installed inside, the profile of which in circular and volute form, so that the annular tube will not break and result in a flat tire when punctured. Moreover, the manufacturing process of the tires for the present invention is very simple, so that the manufacturing costs can be reduced significantly. Meanwhile, the present invention is able to be used in an ordinary tire, to achieve the functions of safety use, convenience in operation and low manufacturing cost.

Preferably, the tube is formed by a rolled up slice of elastic material.

Other objects, advantages and novel features of the invention will become more apparent in the following detailed description taken in conjunction with the accompanying diagrams.

### BRIEF DESCRIPTION OF THE DRAWINGS

Fig. 1 is a perspective view schematically showing the tire assembly of the present invention;
Fig. 2 is a segmented view schematically showing the tire assembly of the present invention;
Fig. 3 is a cross-sectional view schematically showing the tire assembly of the present invention;
Fig. 4 is a perspective view schematically showing the practical use of the present invention;
Fig. 5 is a perspective view schematically showing another aspect of the present invention;
Fig. 6 is a cross-sectional view schematically showing additional aspect of the present invention;
Fig. 7 is a perspective view schematically showing one more aspect of the present invention;
Fig. 8 is a cross-sectional view of a conventional tire assembly; and
Fig. 9 is a cross-sectional view of another conventional tire assembly.

### DETAILED DESCRIPTION OF EMBODIMENTS

While this invention is capable of embodiment in many different forms, shown in the drawings and herein described in detail is the preferred embodiment of the invention. The preferred embodiment is disclosed with the understanding that the present description is but one example of the principles of the invention and is not intended to limit the broad aspects of the invention to the single embodiment illustrated.

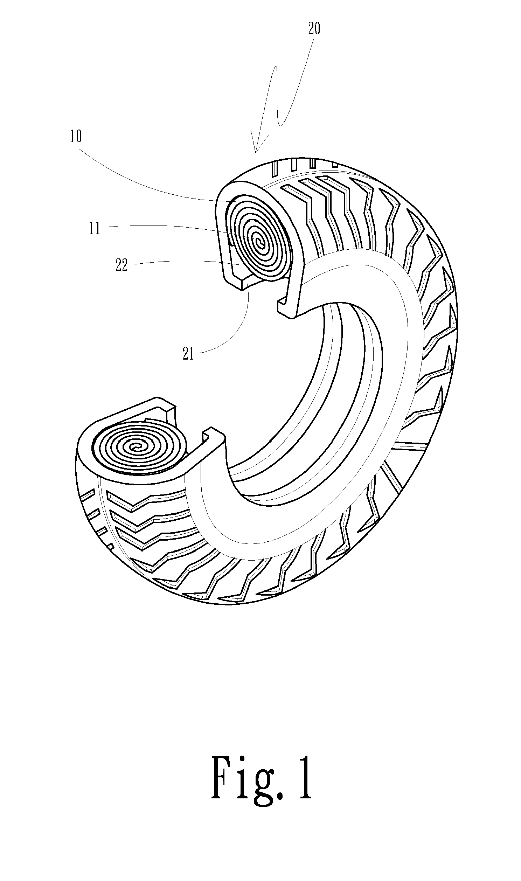

Figs. 1 to 2 are perspective and segmented perspective views schematically showing a preferable embodiment of the present invention.

The tire assembly comprises an annular tube 10, which is a solid and high sustained elastomer having a profile of a circular form comprising a volute structure 11. The annular tube 10 is made of silica gel or Ethylene-Vinyl Acetate (EVA), namely to roll up to become the circular form by using the silica gel or the Ethylene-Vinyl Acetate (EVA); or optionally to roll up by using a gluey layer (not shown) installed inside of the silica gel or the Ethylene-Vinyl Acetate (EVA) which is in the form of slice, to become a fixed circular form.

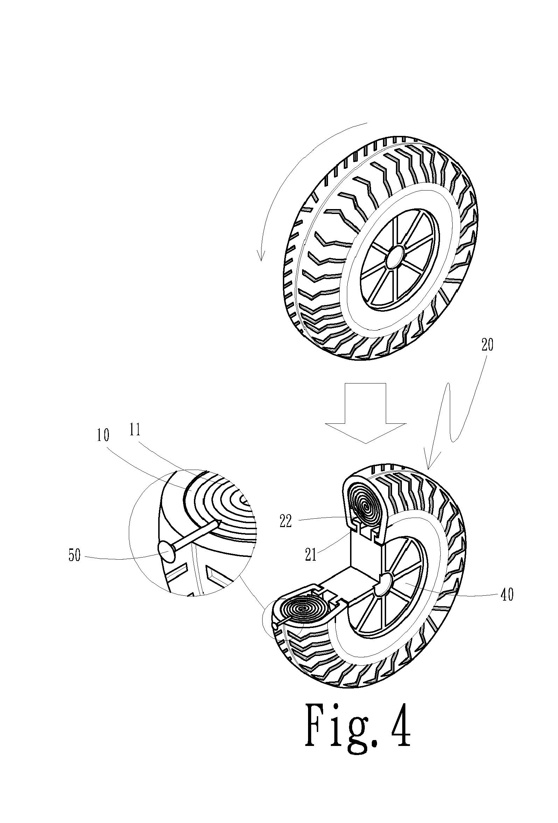

The tire assembly further comprises a tire 20 having securing edges 21 and a mounting cavity 22, wherein the mounting cavity 22 is used for installing the annular tube 10, and the securing edges 21 are used for securing a wheel rim 40. Meanwhile, the annular tube 10 and the tire 20 are set separately (as shown in Fig. 4).

In light of the structural description stated above, the present invention fulfills a safety tire assembly thereof.

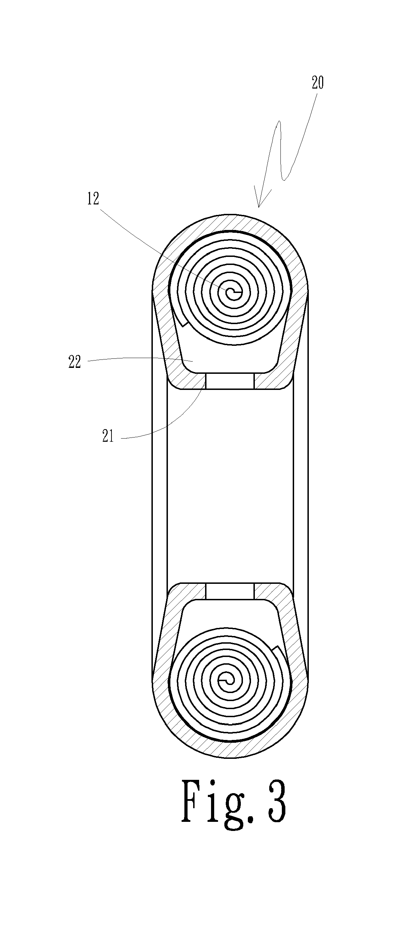

Fig. 3 is a cross-sectional view schematically showing the present invention. Wherein, the tire 20 includes securing edges 21 and the mounting cavity 22 which allows the annular tube 10 to be installed inside the mounting cavity 22. The annular tube 10 is made of silica gel or Ethylene-Vinyl Acetate (EVA) which has a character of elasticity, so that the annular tube 10 will not be punctured and result in a flat tire. Moreover, the manufacturing process of the tires for the present invention is very simple, so that the costs of the manufacture can be reduced significantly. Meanwhile, the present invention is able to be used in an ordinary tire, to achieve the functions of safety use, convenience in operation and low manufacturing costs.

Fig. 4 is a perspective view schematically showing the practical use of the present invention. When the tire 20 is running on the road and punctured by a penetrating object 50, the annular tube 10 may be also punctured by the penetrating object 50, since the annular tube 10 is a high sustained elastomer with volute form, it prevents the situation of a flat tire, and requires no replacement of the tire. The driver can keep on driving the vehicle and pull the vehicle over to a safe place, and then to remove the penetrating object 50. By virtue of the method described above, the present invention has possessed the functions of safety use, convenience in operation and low manufacturing cost.

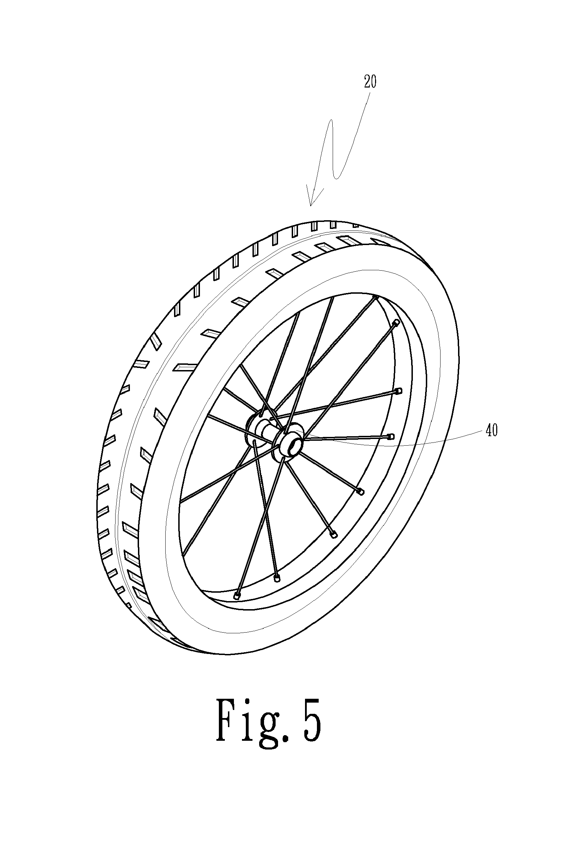

Fig. 5 is a perspective view schematically showing another aspect of the present invention. Wherein, the annular tube 10 and the tire 20 can also be utilized by a motorcycle or a bike by simply assembling a wheel rim 40. Wherever the present invention applies in, it can always provide the functions of safety use, convenience in operation as well as low manufacturing costs.

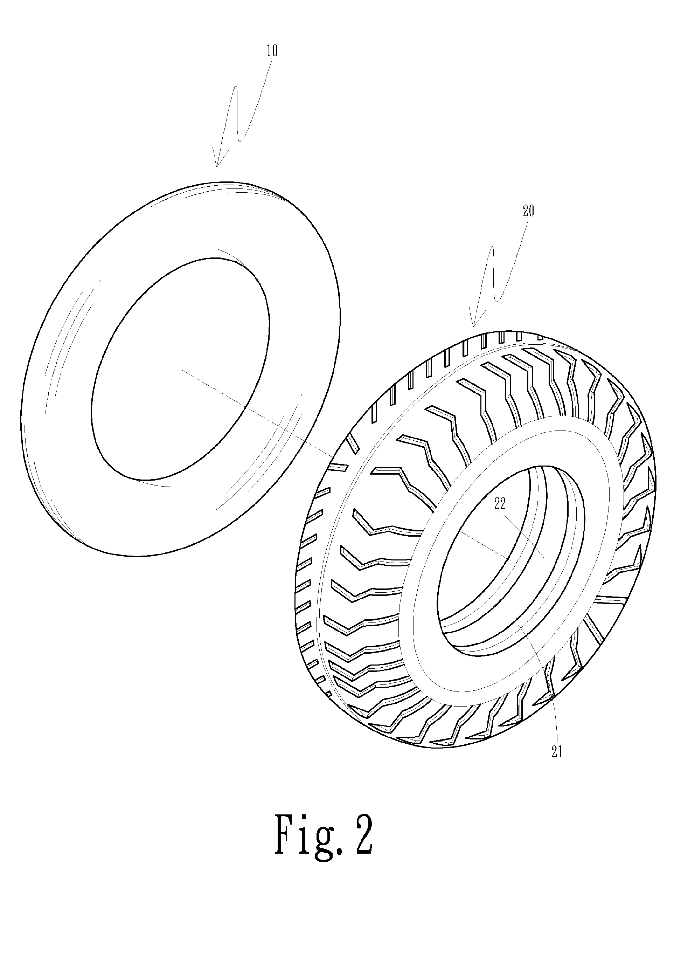

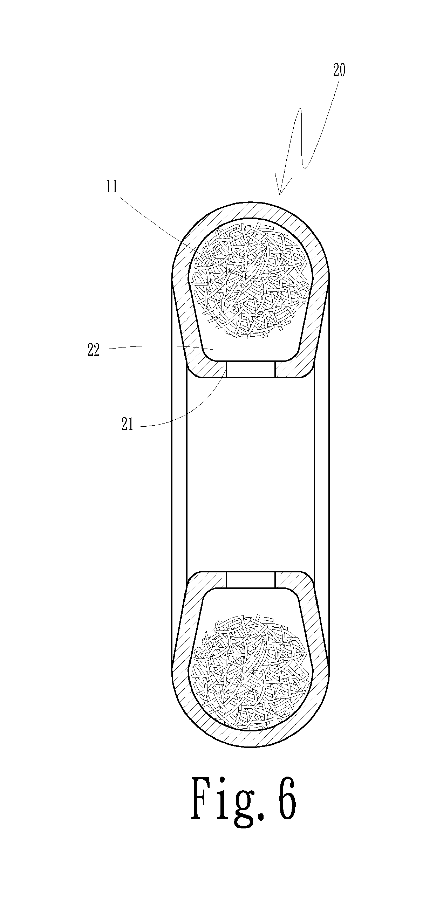

Fig. 6 is a cross-sectional view schematically showing additional aspect of the present invention. Wherein, the structure of the aspect is similar to the structure shown in the Fig. 1 and Fig. 2, except for the annular tube 10 is formed by a method of sintering the scrap plastic strips 12, so that the annular tube 10 will not be punctured and result in a flat tire. Moreover, the manufacturing process of the tires for the present invention is very simple, so that the costs of the manufacture can be reduced significantly. Meanwhile, the present invention is able to be used in an ordinary tire, to achieve the functions of safety use, convenience in operation and low manufacturing costs.

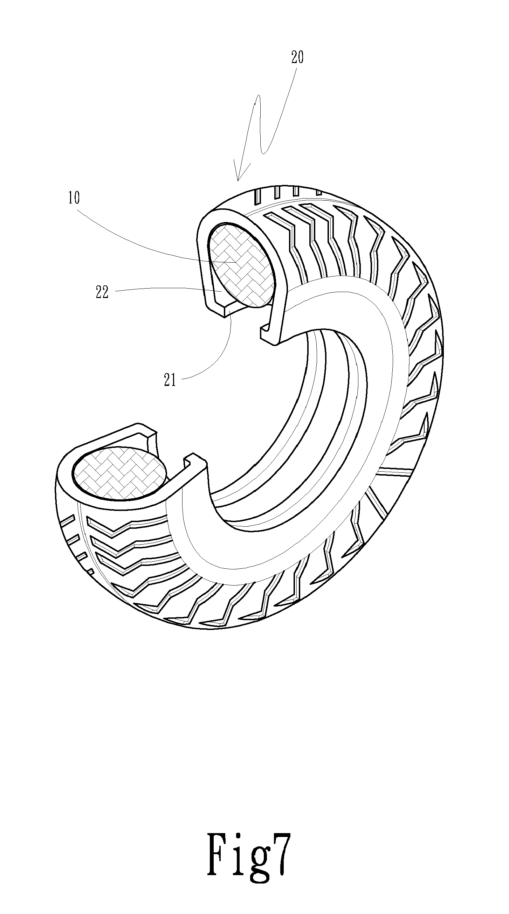

Fig. 7 is a perspective view schematically showing one more aspect of the present invention. Wherein, the structure of the aspect is similar to the structure shown in the Fig. 1 and Fig. 2, except for the annular tube 10 is a solid and contains multiple small openings or large openings, so that the annular tube 10 will not be punctured and result in a flat tire.
Moreover, the manufacturing process of the tires for the present invention is very simple, so that the costs of the manufacture can be reduced significantly. Meanwhile, the present invention is able to be used in an ordinary tire, to achieve the functions of safety use, convenience in operation and low manufacturing costs.

In the light of the above, the advantages of the present invention include:
1. High safety: Because the annular tube is an elastic annular form, when it is punctured by a penetrating object, the driver does not have to worry about the flat tire, the driving safety is therefore secured.
2. Convenience in operation: When the tire is punctured by a penetrating object, the driver has no difficulty in keep on driving the vehicle to a safe place to remove the penetrating object, and will not be distracted by the situation at that moment, so the operation of the tire assembly is convenient.
3. Cost saving: When the tire is punctured by a penetrating object, it only requires a person to remove the penetrating object instead of repairing or replacing the tire, so it has economical benefits and the advantage of cost saving.

Although numerous characteristics and advantages of the present invention have been set forth in the foregoing description, together with details of the structure and function of the invention, this disclosure is one example only, and changes may be made with regard to specific details, particularly in matters of shape, size, and arrangement of parts within the invention to the full extent indicated by the general meaning of the terms in which the appended claims are expressed.

## Claims

1. A tire assembly, comprising:
an annular tube (10) having a profile of a circular form with a volute structure (11); and
a tire (20), which is used for installing the annular tube (10), and is a separate device from the annular tube (10).

2. A tire assembly as claimed in claim 1, wherein the profile of the annular tube (10) is in the solid form.

3. A tire assembly as claimed in claim 1, wherein the profile of the annular tube comprises multiple small openings.

4. A tire assembly as claimed in claim 1, wherein the profile of the annular tube comprises multiple large openings.

5. A tire assembly as claimed in one of claims 1 to 4, wherein the tire (20) comprises securing edges (21) and a mounting cavity (22), wherein the mounting cavity (22) is used for installing the annular tube (10), and the securing edges (21) are used for securing a wheel rim (40).

6. A tire assembly as claimed in one of claims 1 to 5, wherein the annular tube (10) is an elastomer having a high sustained structure.

7. A tire assembly as claimed in claim 6, wherein the elastomer is made of silica gel.

8. A tire assembly as claimed in claim 7, wherein the elastomer is made of silica gel in the form of slice which is rolled up to form the annular tube (10).

9. A tire assembly as claimed in claim 8, wherein a gluey layer is installed inside the slice made of the silica gel, and is to be rolled up to become the annular tube (10).

10. A tire assembly as claimed in one of claims 6 to 9, wherein the elastomer is made of Ethylene-Vinyl Acetate Copolymer (EVA).

11. A tire assembly as claimed in one of claims 6 to 10, wherein the elastomer is formed by a method of sintering scrap plastic strips (12).
